Europäisches Patentamt

European Patent Office

Office européen des brevets

(19)

(11) Veröffentlichungsnummer: **0 163 877**
**B1**

(12) **EUROPÄISCHE PATENTSCHRIFT**

(45) Veröffentlichungstag der Patentschrift: **11.04.90**

(21) Anmeldenummer: **85104702.7**

(22) Anmeldetag: **18.04.85**

(51) Int. Cl.⁵: **B 65 D 51/00, B 60 K 15/04**

(54) **Passring für Behälterstutzen.**

(30) Priorität: **27.04.84 FR 8406651**

(43) Veröffentlichungstag der Anmeldung:
**11.12.85 Patentblatt 85/50**

(45) Bekanntmachung des Hinweises auf die
Patenterteilung:
**11.04.90 Patentblatt 90/15**

(84) Benannte Vertragsstaaten:
**DE FR GB IT**

(56) Entgegenhaltungen:
**GB-A-2 026 452**
**US-A-1 476 566**
**US-A-2 467 088**
**US-A-3 580 414**

(73) Patentinhaber: **PAUL JOURNEE S.A.**
**39, Avenue Marceau**
**F-92400 Courbevoie (FR)**

(72) Erfinder: **Filaine, Roger**
**Immeuble le Fossé vert, app. 1739**
**F-27140 Gisors (FR)**
Erfinder: **Karabowicz, Jean**
**2, rue de Picardie**
**F-95100 Argenteuil (FR)**
Erfinder: **Lambert, Christian**
**HLM Rue Moiscourt, Bat. A, Appt. 290**
**F-27140 Gisors (FR)**
Erfinder: **Percebois, Serge**
**23, Résidence Bellevue**
**F-60240 Chaumont-en-Vexin (FR)**
Erfinder: **Renaud, Jean-Pierre**
**F-02140 Landouzy-La-Ville (FR)**
Erfinder: **Thienard, Jean-Claude**
**2, rue Saint-Eutrope**
**F-60240 Chaumont-en-Vexin (FR)**

(74) Vertreter: **Patentanwaltsbüro Cohausz & Florack**
**Postfach 14 01 20 Schumannstrasse 97**
**D-4000 Düsseldorf 1 (DE)**

Courier Press, Leamington Spa, England.

## Beschreibung

Die Erfindung bezieht sich auf einen Behälter mit Anpaßring für einen eine Öffnung bildenden Behälterstutzen, der versehen ist mit einer Krempe mit rampenförmigen Ansatzflächen, wie bestimmt Behälter in Kraftfahrzeugen sie aufweisen, wobei die Krempe und ihre Rampe zum Einbau und Festsetzen eines Verschlußstopfens dienen.

Will man an einem Bahälterstutzen der vorgenannten Art den Zugang zum Behälter beispielsweise durch eine unmittelbar an Stutzen befestigte Klappe verschließen, muß auf dem Stutzen eine drehbare Unterstützung angebracht werden, und diese Unterstützung in Form eines Paßrings darf sich nicht losschrauben und abnehmen lassen, wie dies bei einem Stopfen der Fall ist, damit jedes unbeabsichtigtes Lösen und Entfernen verhindert wird.

Aus der GB—A 2026452 ist ein Anpaßring bekannt, durch den ein Stutzen mit einem äußeren Kragen zu einem Stutzen mit innerem Kragen umgewandelt wird. Aus der UA—A 1476566 ist es bekannt, bei einem Behälter ohne Stutzen einen Anpaßring in eine Behälteröffnung einzusetzen.

Aufgabe der Erfindung ist es, einen einfachen Anpaßring zu schaffen, der leicht zu verwenden ist und eine sichere Sperre gewährleistet.

Zu diesem Zweck ist der erfindungsgemäße Ring dadurch gekennzeichnet, daß die Krempe nach innen gewandt ist und daß der Anlaßring einen Innenkörper mit zwei diametral entgegengestzten, nach außen weisenden Vorsprüngen umfaßt, die den Rand des Stutzens untergreifen und dort an den Rampen anliegen, wobei der Innerkörper ein Außengewinde aufweiste, mit dem das Innengewinde eines in der Stutzenöffnung einliegenden Außenkörpers zusammenwirkt, der durch das Außengewinde des Innenkörpers gehalten ist und sich auf dem Umfang des Behälterstutzens abstützt.

Das Verschrauben des Außenkörpers mit dem Innenkörper verursacht ein Ansteigen des Innenkörpers im Innern des Stutzens, wodurch die Vorsprünge des Innenkörpers jeweils gegen eine Rampe drücken und auf diese Weise den Zusammenbau auf dem Stutzen verkeilen. Eine Drehung des Zusammenbaus auf dem Stutzen verstärkt die Verkeilung dergestalt, daß der Ring auf dem Stutzen wirksam festgesetzt wird.

Ein Ausfährungsbeispiel der Erfindung ist in der Zeichnung dargestellt und wird im folgenden näher beschrieben. Es zeigen.

Abb. 1 eine Schemaansicht in diametralem Schnitt eines auf einem Behälterstutzen befestigten erfindungsgemäßen Ring und

Abb. 2 ein abgewickeltes Schema eines Teils der Rampe des Stutzens in Abb. 1.

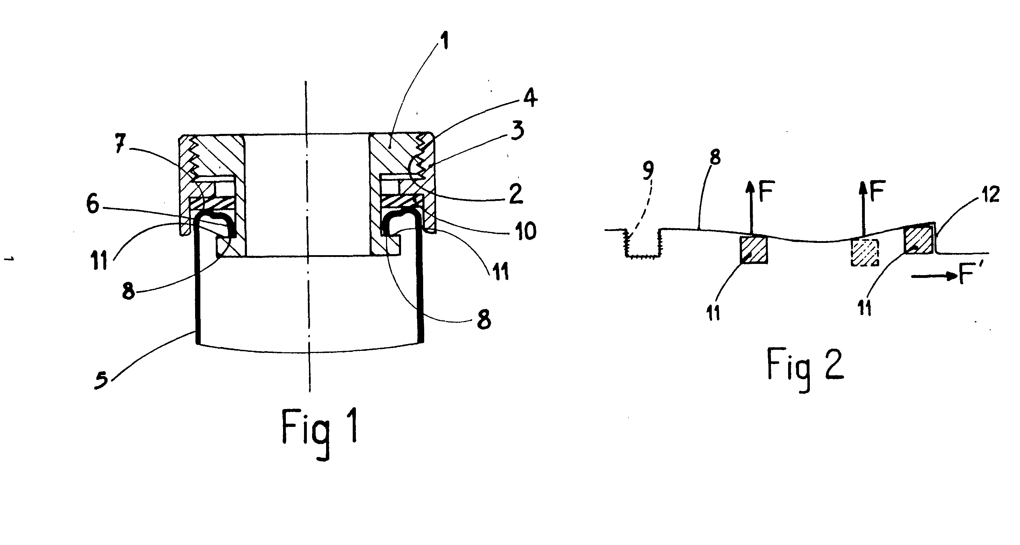

Der ring umfaßt einen Innenkörper 1 mit einem Außengewinde 2, auf das ein Außenkörper 3 bis einem Innengewinde 4 geschraubt wird. Das Ganze wird auf einem Behälterstutzen 5 befestigt, der durch eine Innenkrempe 6 mit einer Umfangskrone 7 abschließt. Die Krempe 6 wird ihrerseits durch ein Rampenprofil 8 (Abb. 2) abgeschlossen und umfaßt zwei diametral entgegengesetzte Ausschnitte 9 für die Aufnahme von zwei Klauen eines Verschlußstopfens, die durch Drehung mit den Rampen 8 zum Festziehen und Festsetzen des Stopfens auf dem Stutzen zusammenwirken. Eine derartiger Stutzen gehört zu einer großen Anzahl von bekannten Behältern in Kraftfahrzeugen.

Der außenkörper 3 stützt sich auf die Krone 7 des Stutzens 5 über einen Dichtring 10 ab. Der Innenkörper 1 umfaßt zwei diametral entgegengesetzte Vorsprünge 11, die in den Stutzen über die Ausschnitte 9 einedrigen und sich, wenn sich der Innenkörper in bezug auf den Stutzen 5 dreht, egen die Rampen 8 anlegen.

Wenn mann den Außenkörper 3 auf den Innenkörper 1 schraubt, steigt der Innenkörper 1 im Innern des Stutzens 5 an, und die Vorsprünge 11 erfahren eine Bewegung in Richtung des Pfeils F (Abb. 2). Die auf den Vorsprung 11 angewandte Kraft bewirkt ein Verkeilen gegen die Rampe 8. Wenn sich der vorsprung 11 an einer ansteigenden Rampe befindet (linker Teil der Abb. 2), bringt eine Drehung des Außenkörpers 3 im Verlauf eines Aufschraubversuchs in Richtung des Pfeils F den Körper 1 in Drehung, bis er durch Anschlag des Vorsprungs 11 gegen eine Schulter 12 zum Stillstand kommt, die zwei aufeinanderfolgende Rampen trennt. Im Fall der absteigenden Rampe wird die Verkeilung des Vorsprungs 11 gegen die Rampe beim Versuch eines Losschraubens des Außenkörpers 3, der allein zugänglich ist, in Richtung des Pfeils F verstärkt.

## Patentanspruch

Behälter mit Anpaßring (1,3) für einen eine Öffnung bildenden Behälterstutzen (5), der versehen ist mit einer Krempe (6) mit rampenförmigen Ansatzflächen (8), dadurch gekennzeichnet, daß die Krempe (6) nach innen gewandt ist und daß der Anlaßring (1,3) einen Innenkörper (1) mit zwei diametral entgegengestzten, nach außen weisenden Vorsprüngen (11) umfaßt, die den Rand des Stutzens (5) untergreifen und dort an den Rampen (8) anliegen, wobei der Innerkörper (1) ein Außengewinde (2) aufweiste, mit dem das Innengewinde (4) eines außerhalb der Stutzenöffnung liegenden Außenkörpers (3) zusammenwirkt, der durch das Außengewinde des Innenkörpers (1) gehalten ist und sich auf dem Umfang (7) des Behälterstutzens (5) abstützt.

## Revendication

Réservoir à bague d'adaptation (1, 3) pour une tubulure de réservoir (5) formant une ouverture, ladite tubulure étant pourvue d'un rebord (6) mini d'un profil à rampes (8), caractérisé en ce que le rebord (6) est rabattu vers l'intérieur et en ce que la bague d'adaptation (1,3) comprend un corps intérieur (1) mini de deux saillies extérieures (11) diamétralement opposées, lesdites saillies coopérant avec le bord de la tubulure (5) en y reposant contre les rampes (8), ledit corps intérieur (1) étant mini d'un pas-de-vis extérieur (2) avec lequel coopère le pas-de-vis intérieur (4) d'un corps extérieur (3) se situant à l'extérieur de l'ouverture de la tubulure, ledit corps extérieur étant maintenu par le pas-de-vis extérieur du corps intérieur (1) et s'appuyant sur la périphérie (7) de la tubulure de réservoir (5).

**Claim**

A container with a neck ring (1, 3) for a container nozzle (5) which forms an opening, which nozzle comprises a rim (6) with ramp-shaped attachement shoulders (8), characterized in that the rim is bent back inwards and in that the neck ring (1, 3) comprises an inner component (1) with two diametrically opposite external projections (11) which engage under the edge of the nozzle (5) and bear there on the ramps (8), and the inner component (1) comprises an external thread (2) which cooperates with the internal thread (4) of an outer component (3) which is located outside the opening of the nozzle (5) and which is held by the external thread of the inner component (1) and bears on the peripheral edge (7) of the container nozzle (5).

Fig 2

Fig 1

1